# EUROPEAN PATENT APPLICATION

(11) **EP 4 458 129 A1**
(43) Date of publication of application: **06.11.2024**
(21) Application number: 24165344.3
(22) Date of filing: 21.03.2024
(51) Int. Cl.: A01D 43/08, A01D 43/10

(54) **AGRICULTURAL HARVESTER**

(30) Priority: 05.05.2023 GB 202306710
(71) Applicant: AGCO International GmbH, 8212 Neuhausen am Rheinfall (CH)
(72) Inventor: DREER, Constantin, 87616 Marktoberdorf (DE)
(74) Representative: AGCO Intellectual Property Department

(57) **Abstract**

A forage harvester is disclosed including a grain processor for processing of a chopped crop. The grain processor is driven by a belt drive in which an endless belt has a belt tension, an actuator for adjusting the belt tension in the belt drive and a control device for adjusting the actuator. The control device is configured to control the actuator based on input signals supplied to the control device with regard to a property of the crop and a stored relationship between the signal and an associated setting value of the actuator in terms of adapting the belt tension in the belt drive to the property of the crop. The control device is configured to receive the input signals from a sensor that interacts with the crop upstream of the grain processor and/or taken location-specific from a stored map. The actuator is commanded to adjust the belt tension in the belt drive based on the input signals related to the crop being processed.

## Description

### CROSS-REFERENCE TO RELATED APPLICATIONS

Not applicable.

### FIELD

The present invention relates to an agricultural harvester, and, in particular, to a forage harvester and improvements relating to the control of the drive system for a grain processor of a forage harvester.

### BACKGROUND

It is known to provide a forage harvester for harvesting various crops including crops containing grains or corn kernels. Such harvesters may comprise a header apparatus for harvesting a crop, a chopping apparatus for chopping the harvested crop and grain processor for processing of the chopped crop. A control device may be provided for adjusting the degree of processing of the grain processor. The processed crop may be used as fodder for livestock.

Where the harvested crop is corn or maize, the corn kernels are not digestible in an intact condition. Accordingly, the chopped crop is passed in the grain processor through two or more cracker rollers between which the kernels are opened up or crushed in order to expose the inside of the kernels.

The degree of processing of the chopped crop, which is related to the belt tension in the drive of the grain processor, determines on the one hand the proportion of broken down or crushed kernels and on the other hand also the energy requirement for operation of the grain processor. However, since these variables present different optimal requirements, the aim is to find a favourable operating point for the grain processor between achieving breaking down of a sufficiently high proportion of the kernels passing through the grain processor and minimising the energy requirement for operation of the grain processor.

It is an advantage of the present invention that this problem is addressed.

### BRIEF SUMMARY

According to a first aspect of the present invention, a forage harvester comprises a grain processor for processing of a chopped crop, the grain processor being driven by a belt drive in which an endless belt has a belt tension, an actuator for adjusting the belt tension in the belt drive and a control device for adjusting the actuator, the control device being configured to control the actuator based on input signals supplied to the control device with regard to a property of the crop and a stored relationship between the signal and an associated setting value of the actuator in terms of adapting the belt tension in the belt drive to the property of the crop, the control device being configured to receive the input signals from either i) a sensor that interacts with the crop upstream of the grain processor and/or ii) taken location-specific from a stored map and the actuator commanded to adjust the belt tension in the belt drive based on the input signals related to the crop being processed.

Preferably, the sensor is a NIR sensor.

Preferably, the sensor is an optical sensor, more preferably a camera.

Preferably, the sensor is a radar sensor, a lidar sensor or a laser sensor.

Preferably, where the input signals are taken location-specific from a stored map, this includes information relating to crop harvested in a previous harvesting process from the same location associated with the stored map.

Preferably, the input signals relate to one or more of the crop density, moisture, proportion of grain, mechanical properties, and colour of the harvested crop.

Preferably, the forage harvester further comprises a user interface whereby an operator can select a desired belt tension in the belt drive of the grain processor, the control device being configured to control the actuator based upon the desired belt tension.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

The invention will now be described, by way of example only, with reference to the accompanying drawings, in which:
FIG 1 shows a schematic side view of a forage harvester in accordance with the present invention;
FIG 2 shows a schematic side view of a belt drive for use with the forage harvester of FIG 1; and
FIG 3 shows a schematic diagram illustrating an embodiment of a control system for a forage harvester in accordance with the invention.

### DETAILED DESCRIPTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description.

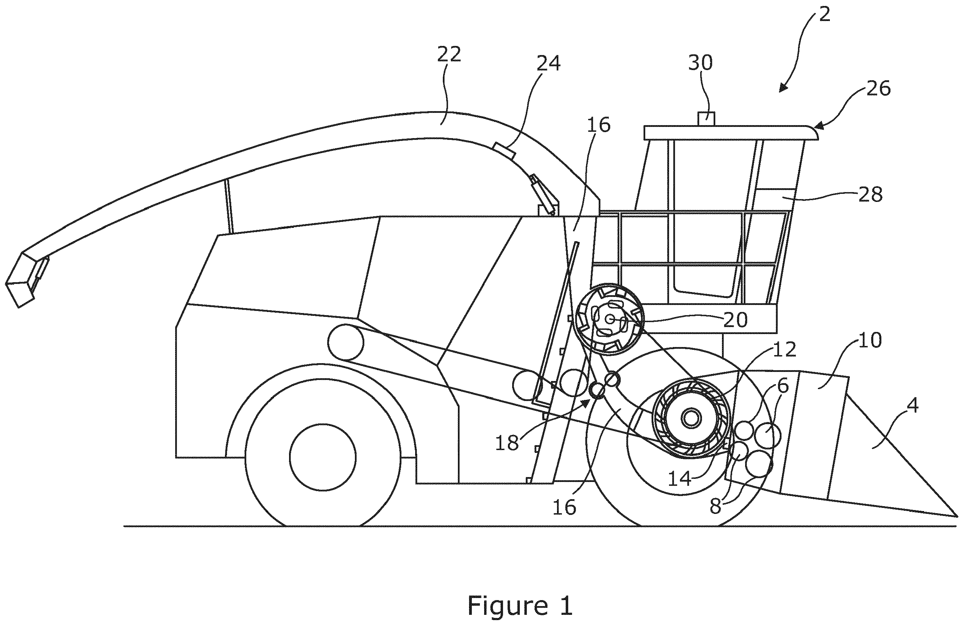

With reference to Figure 1, a forage harvester 2 is shown provided with a front attachment 4 such as a header which contains cutting equipment for cutting and harvesting a crop. The cut crop is fed from the header via associated feed rollers 6,8 in a housing 10 to a chopper drum 12 where the crop is chopped into smaller pieces between the chopper drum 12 and an associated shear bar 14. The chopped crop passes through a duct 16 and is optionally directed into a cracker unit 18 where the crop is further crushed and threshed. The harvested crop is then blown upwards along the duct 16 by an accelerator 20 and exits through a spout 22 directing the processed crop into a trailer or other vehicle moving alongside the forage harvester 2.

A sensor 24, downstream of the processing equipment, preferably located within the spout 22, detects one or more properties of the crop passing through the spout 22. The sensor 24 is conveniently an NIR sensor. Alternatively, the sensor 24 is an optical sensor, more preferably a camara. The camara may be associated with image analysis software to determine a processed crop property such as a percentage of cracked maize kernels in the processed crop. Alternatively, the sensor may be a radar sensor, a lidar sensor or a laser sensor.

The forage harvester may be further provided with an operator's cab 26. A user interface 28 may be located within the operator's cab 26 to communicate information to the operator regarding the operation of the forage harvester. Alternatively, or additionally, the user interface 28 may be provided on an electronic device by way of application software to communicate information to the operator regarding the operation of the forage harvester 2.

Alternatively, or additionally, a GPS sensor 30 is provided such that information relating to crop harvested in a previous harvesting process associated with the same location may be retrieved from a stored map.

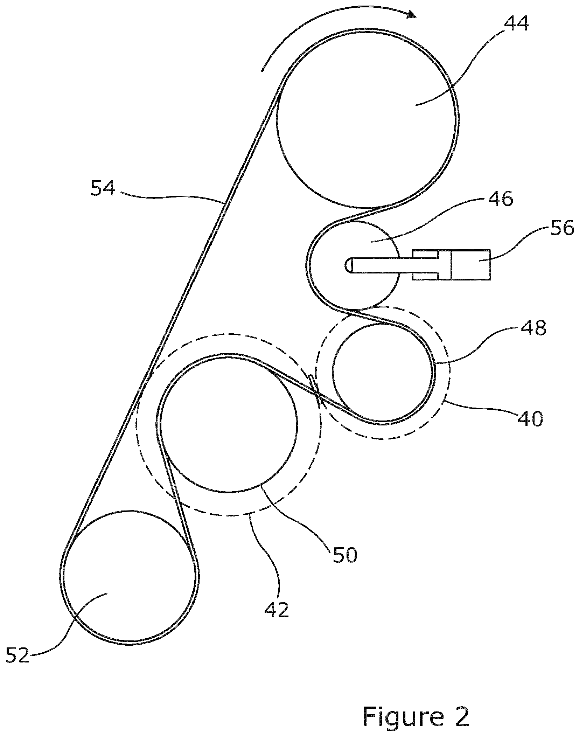

With reference to Figure 2, a schematic side view illustrates a relationship of example elements for driving first and second cracker rollers 40,42 of the cracker unit 18 in the forage harvester 2. The drive arrangement for the cracker unit 18 comprises a drive pulley 44, a tension pulley 46, first and second roller pulleys 48,50 associated with the respective first and second cracker rollers 40,42 and a guide pulley 52. A drive belt 54 is located about the rollers of the drive arrangement to define a drive belt path. The tensioning pulley 46 is located adjacent the guide belt 54 between the drive pulley 44 and the first roller pulley 48. An actuator, in the form of a tensioning cylinder 56, is provided to allow movement of the tensioning pulley 46 to allow tensioning of the drive belt 54, by acting on the drive belt 54 between the drive pulley 44 and the first roller pulley 48. The guide pulley 52 is located in the drive belt path between the second roller pulley 50 and the drive roller 54. It will be appreciated from Figure 2 that the drive pulley 54 and the guide pulley 52 are located at opposing ends of the loop of the drive belt path.

Other drive arrangements may be provided for in which a tensioning cylinder is used to position a tensioning pully to affect the tension in an endless drive belt.

Generally, it is understood that increased torque requirements on the pulleys require higher tensioning to avoid belt slippage. Accordingly, higher humidity of the processed crop can be achieved by increasing the belt tension, and greater crop throughput can be achieved by increasing the belt tension to avoid belt slippage. The more kernels the harvested crop contains, the more tensioning must be provided to ensure that each kernel is safely cracked. Further when considering the harvested crop as a whole, different crop consistency for example due to the hardness of the kernels, the planting density of the crop to be harvested and the maturity of the harvested crop will require modifications to the belt tension to achieve the desired quality from the processed crop.

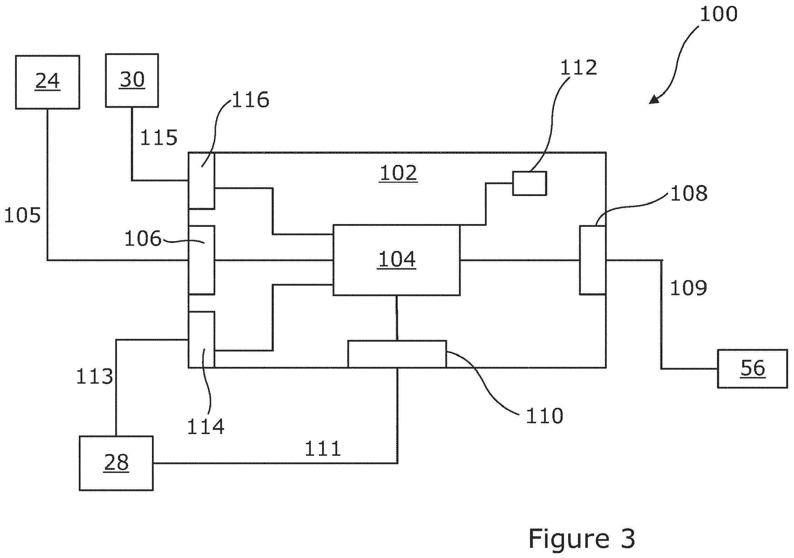

Turning to Fig 3, an embodiment of a control system 100 for a drive arrangement of the forage harvester 2 is shown. The control system 100 comprises a controller 102 having an electronic processor 104, electronic inputs 106, 114, 116 and electronic outputs 108, 110. The processor 104 is operable to access a memory 112 of the controller 102 and execute instructions stored therein to perform the steps and functionality described below.

The processor 104 is operable to receive sensor data via input 106 which, in the illustrated embodiment, takes the form of input signals 105 received from the chute sensor 24. The processor 104 is operable to receive data regarding a desired processed crop property via input 114 which, in the illustrated embodiment, takes the form of input signals 113 from the user terminal 26. Utilising these input signals, the processor 104 is configured to analyse the input signals and determine therefrom an optimal belt tension to achieve a desired input signal 105 from the chute sensor 24. In particular, the memory 112 of the controller 102 is provided with a stored relationship between the user terminal input signal and an associated setting value of an actuator, that is the tensioning cylinder 56, in terms of adapting the belt tension in the belt drive to the desired property of the processed crop and to provide instructions to the tensioning cylinder 56.

In an alternative embodiment the data regarding a desired crop property is preset and retained within the memory 112. For example, the processor 104 receives input signals relating to the location of the forage harvester 2, for example by way of a signal from a GPS sensor 30, and the processor 104 uses an input signal 115 from the GPS sensor 30 to retrieve information relating to a processed crop harvested in a previous harvesting process associated with the same location.

As described above, the controller 102 includes an electronic output 108 configured to output control signals 109 generated by the processor 104 for controlling operation of the tensioning cylinder 56. Specifically, processor 104 is operable to generate, and the controller 102 operable to then output via output 108, control signals 109 for controlling operation of the tensioning cylinder 56 in the manner described. As will be appreciated, the controller 102 may output the control signals 109 to a local processing unit of the tensioning cylinder 56 for controlling operation thereof.

Output 110 is operably coupled to the user interface 28 of the forage harvester 2. Here, the control system 100 is operable to control operation of the user interface 28, for example through output of control signals 111 in order to communicate to an operator of the forage harvester information relating to the operation of the control system 100. Specifically, the control system 100 is operable to control the user interface 28 to display to the operator an indicator of the belt tension and/or the desired processed crop property and/or the detected processed crop property.

The user interface 28 may additionally allow an operator to select or adjust the belt tension in the belt drive of the grain processor, the processor 104 being operable to access the memory 112 of the controller 102 and execute appropriate instructions to adjust the tensioning cylinder 56 as required.

All references cited herein are incorporated herein in their entireties. If there is a conflict between definitions herein and in an incorporated reference, the definition herein shall control.

From reading the present disclosure, other modifications will be apparent to persons skilled in the art. Such modifications may involve other features which are already known in the field of forage harvesters and component parts therefore and which may be used instead of or in addition to features already described herein.

## Claims

1. A forage harvester comprises a grain processor for processing of a chopped crop, the grain processor being driven by a belt drive in which an endless belt has a belt tension, an actuator for adjusting the belt tension in the belt drive and a control device for adjusting the actuator, the control device being configured to control the actuator based on input signals supplied to the control device with regard to a property of the crop and a stored relationship between the signal and an associated setting value of the actuator in terms of adapting the belt tension in the belt drive to the property of the crop, the control device being configured to receive the input signals from either i) a sensor that interacts with the crop upstream of the grain processor and/or ii) taken location-specific from a stored map and the actuator commanded to adjust the belt tension in the belt drive based on the input signals related to the crop being processed.

2. A forage harvester according to claim 1, **characterised in that** the sensor is a NIR sensor.

3. A forage harvester according to claim 1, **characterised in that** the sensor is an optical sensor, more preferably a camera.

4. A forage harvester according to claim 1, **characterised in that** the sensor is a radar sensor, a lidar sensor or a laser sensor.

5. A forage harvester according to claim 1, **characterised in that** where the input signals are taken location-specific from a stored map, this includes information relating to crop harvested in a previous harvesting process from the same location associated with the stored map.

6. A forage harvester according to claim 1, **characterised in that** the input signals relate to one or more of the crop density, moisture, proportion of grain, mechanical properties, colour of the harvested crop.

7. A forage harvester according to claim 1, **characterised in that** the forage harvester further comprises a user interface whereby an operator can select a desired belt tension in the belt drive of the grain processor, the control device being configured to control the actuator based upon the desired belt tension.
